# EUROPÄISCHE PATENTSCHRIFT

(11) **EP 1 055 069 B1**
(45) Veröffentlichungstag und Bekanntmachung des Hinweises auf die Patenterteilung: **28.08.2002**
(21) Anmeldenummer: 98958918.9
(22) Anmeldetag: 25.11.1998
(51) Int. Cl.: F04B 7/00, F04B 15/02

(54) **SCHIEBERVORRICHTUNG FÜR EINE ZWEIZYLINDER-DICKSTOFFPUMPE**
SLIDING DEVICE FOR A TWO-CYLINDER PUMP FOR LIQUIDS
DISPOSITIF COULISSANT POUR POMPE A LIQUIDE EPAIS A DEUX CYLINDRES

(30) Priorität: 09.02.1998 DE 19804863
(43) Veröffentlichungstag der Anmeldung: 29.11.2000
(73) Patentinhaber: PUTZMEISTER Aktiengesellschaft, 72631 Aichtal (DE)
(72) Erfinder: HURR, Hellmut, D-72760 Reutlingen (DE); BÜHRER, Klaus, D-70794 Filderstadt (DE); BENCKERT, Hartmut, D-70794 Filderstadt (DE)
(74) Vertreter: Wolf, Eckhard, Dr.-Ing.
(86) Internationale Anmeldenummer: EP9807588
(87) Internationale Veröffentlichungsnummer: WO99040319

(56) Entgegenhaltungen:
- EP-A- 0 171 796
- GB-A- 2 039 603
- US-A- 4 502 851

## Beschreibung

Die Erfindung betrifft eine Schiebervorrichtung für eine Pumpe mit zwei im Gegentakt arbeitenden Förderzylindern zum Fördern von Dickstoffen, die der Pumpe über einen Materialaufgabebehälter zugeleitet werden, mit einem in den Materialaufgabebehälter eingreifenden, im wesentlichen C-förmig gekrümmten Schwenkrohr, das an seinem oberen Ende mit einem über die Rückwand des Materialaufgabebehälters im wesentlichen parallel zu den Förderzylindern überstehenden und an seinem dem Schwenkrohr abgewandten Ende über eine Rohrdrehverbindung an eine Förderleitung angeschlossenen Verlängerungsrohr starr verbunden und um die Achse des Verlängerungsrohrs mittels eines Umsteuermechanismus so drehbar angeordnet ist, daß sein anderes, vorzugsweise mit einem Verschleißring bestücktes unteres Ende im Wechsel an die Öffnungen der an der Rückwand des Materialaufgabebehälters angeschlossenen Förderzylinder anschließt.

Schiebervorrichtungen dieser Art (DE-C-21 62 406) sind wegen ihrer kompakten Bauweise besonders für Autobetonpumpen geeignet, bei denen das über die Rückwand des Materialaufgabebehälters überstehende Verlängerungsrohr eine Verbindung zu dem auf den vorderen Teil des Fahrgestells ruhenden Fördermast bildet und bei denen der Materialaufgabebehälter von der rückwärtigen Stirnseite des Fahrgestells her mühelos beschickt werden kann. Die einem hohen Verschleiß ausgesetzten Teile der Schiebervorrichtung sind von der Oberseite des Materialaufgabebehälters her leicht zugänglich und können daher einfach ausgewechselt werden. Das über die Rückwand des Materialaufgabebehälters überstehende Verlängerungsrohr dient bei den bekannten Schiebervorrichtungen einerseits als Transportrohr für die oft abrassiven Dickstoffe und unterliegt daher einem nicht unerheblichen Verschleiß. Andererseits hat das Verlängerungsrohr zugleich eine Lagerfunktion für das Schwenkrohr. Bei zunehmendem Verschleiß, d.h. bei abnehmender Wandstärke im Verlängerungsrohr, nimmt die Festigkeit des Verlängerungsrohrs ab, so daß eine allmählich zunehmende Bruchgefahr entsteht. Die Bruchgefahr besteht vor allem dann, wenn schwerer, hochviskoser Beton gefördert wird und die an dem Verlängerungsrohr angreifenden Förderkräfte entsprechend groß werden. Ein Rohrbruch in diesem Bereich ist insofern problematisch, als er außerhalb des Materialaufgabebehälters erfolgt und deshalb einen sofortigen Abbruch des Pumpbetriebs erfordert.

Ausgehend hiervon liegt der Erfindung die Aufgabe zugrunde, die bekannte Schiebervorrichtung der eingangs angegebenen Art dahingehend zu verbessern, daß der Verschleiß des Verlängerungsrohrs keinen Nachteil für die Betriebszuverlässigkeit mit sich bringt.

Zur Lösung dieser Aufgabe werden die im Patentanspruch 1 bzw. 2 angegebenen Merkmalskombinationen vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß dem einem Verschleiß unterliegenden Verlängerungsrohr keine Lagerfunktion zukommt. Um dies zu erreichen, wird gemäß der Erfindung ein das Verlängerungsrohr koaxial umgebendes, starr mit dem oberen Schwenkrohrende verbundenes und sich zumindest über einen Teil des Verlängerungsrohrs erstrekkendes Tragrohr vorgeschlagen, das an mindestens einem im Abstand von der Rückwand des Materialaufgabebehälters angeordneten Drehlager abgestützt und mit dem Verlängerungsrohr lösbar verbunden ist.

Eine bevorzugte Ausgestaltung der Erfindung sieht vor, daß das Verlängerungsrohr über einen Flansch mit dem Schwenkrohr und mit einem Umsteuerhebel des Umsteuermechanismus lösbar verbunden ist und daß das Tragrohr starr mit dem Flansch verbunden, vorzugsweise an diesem angeschweißt ist. Grundsätzlich ist es möglich, das Verlängerungsrohr und das Tragrohr über einen gemeinsamen Klemmflansch mit dem Schwenkrohr und einem Umsteuerhebel des Umsteuermechanismus lösbar zu verbinden. Um das Tragrohr und das Verlängerungsrohr einfach montieren und demontieren zu können, ist es wichtig, daß die Außenfläche des Verlängerungsrohrs und die Innenfläche des Tragrohrs einen Ringspalt begrenzen. Die Verbindung zwischen Tragrohr und Verlängerungsrohr kann unter Aufrechterhaltung des Ringspalts dadurch stabilisiert werden, daß das Tragrohr an seinem freien Ende mit dem Verlängerungsrohr verklemmt oder verkeilt ist. Insbesondere kann das Tragrohr an seinem freien Ende mittels Stellschrauben am Verlängerungsrohr lösbar verankert werden. Wenn somit am Verlängerungsrohr durch Verschleiß ein Leck auftritt, tritt beim Pumpvorgang Material in den Ringspalt aus. Wenn nun in dem Tragrohr zumindest in der Nähe seines schwenkrohrseitigen Endes mindestens ein vorzugsweise nach unten weisender radialer Wanddurchbruch vorgesehen ist, kann ein am Verlängerungsrohr auftretendes Leck relativ leicht von außen festgestellt werden. Aufgrund der stabilisierenden Wirkung des Tragrohrs wird ein Rohrbruch zuverlässig vermieden.

Zur Erhöhung der Verschleißfestigkeit kann das Verlängerungsrohr zweilagig ausgebildet werden, wobei die innere Rohrlage verschleißfest ausgebildet, vorzugsweise gehärtet ist und die äußere Rohrlage aus einem zähen nicht gehärteten Stahl bestehen kann. Da das gekrümmte Schwenkrohr an seiner Innenseite ungehärtet ist, ist es von Vorteil, wenn das verlängerungsrohr zumindest an der Anschlußstelle des Schwenkrohrs einen größeren Innendurchmesser als das Schwenkrohr aufweist, so daß im Schwenkrohr ein größerer Materialabtrag möglich ist.

Um die beim Umsteuervorgang auftretenden Biegekräfte besser aufnehmen zu können, ist es von Vorteil, wenn der Umsteuerhebel einen förderleitungsseitig auskragenden Stützarm aufweist, auf welchem das Tragrohr abstützbar ist. Der Stützarm kann dabei mit seinem vorzugsweise eine Lagerschale tragenden Ende lose gegen das Tragrohr anliegen oder lösbar mit diesem verbunden werden.

Die das Tragrohr abstützenden Drehlager sind vorteilhafterweise als Gleitlager mit auswechselbaren Gleitlagersegmenten ausgebildet. Je nach Durchmesser des abzustützenden Tragrohrs oder Verlängerungsrohrs können mehr oder weniger dickwandige Lagerschalensegmente verwendet werden.

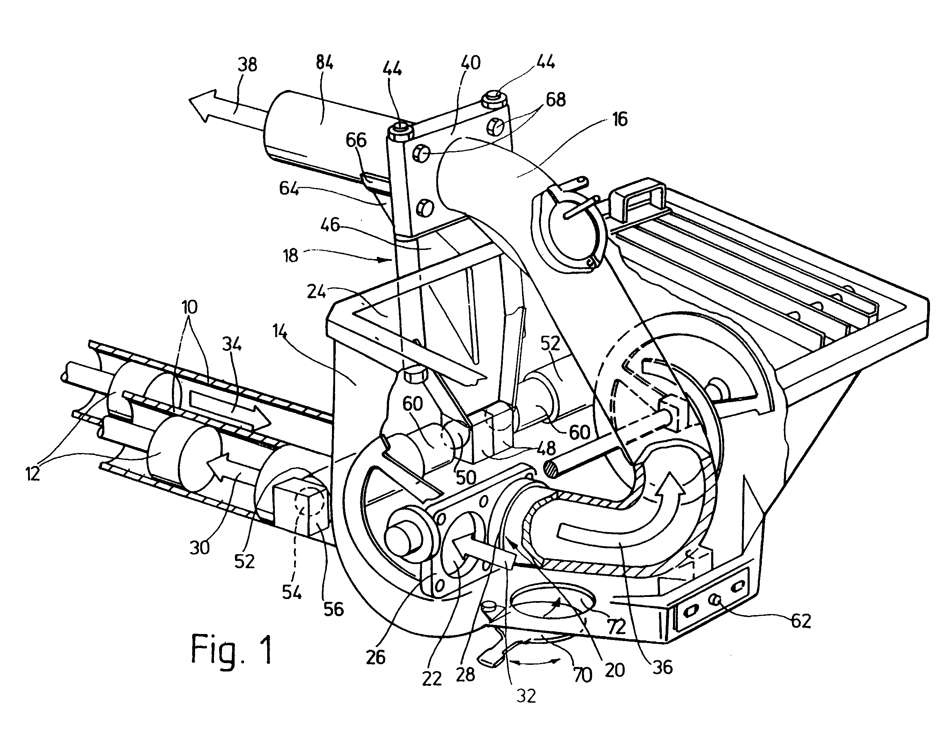

Im folgenden wird die Erfindung anhand eines in der Zeichnung in schematischer Weise dargestellten Ausführungsbeispiels näher erläutert. Es zeigen
- Fig. 1: einen Ausschnitt einer Zweizylinder-Dickstoffpumpe in teilweise aufgebrochener schaubildlicher Darstellung;
- Fig. 2: einen Längsschnitt durch die Schwenkrohr-Verlängerungsrohr-Tragrohr-Kombination der Schiebervorrichtung nach Fig. 1

Die in der Zeichnung gezeigte Zweizylinder-Dickstoffpumpe ist vor allem für den Einsatz in Autobetonpumpen bestimmt. Sie besteht im wesentlichen aus zwei Förderzylindern 10 mit hydraulisch im Gegentakt angetriebenen Förderkolben 12, einem Materialaufgabebehälter 14 und einer mit einem C-förmigen Schwenkrohr 16 von oben her in den Materialaufgabebehälter 14 eingreifenden, mit einem Umsteuermechanismus 18 betätigbaren Schiebervorrichtung 20. Die Förderzylinder 10 sind über öffnungen 22 an die Rückwand 24 des Materialaufgabebehälters 14 angeschlossen, wobei die öffnungen 22 auf der Innenseite des Materialaufgabebehälters 14 durch eine brillenförmige Verschleißplatte 26 begrenzt sind. Das Schwenkrohr 16 liegt mit seinem unteren, einen Verschleißring 28 tragenden Ende gegen die Verschleißplatte 26 an und wird durch den Umsteuermechanismus 18 in Abhängigkeit von der Bewegungsrichtung der Förderkolben 12 in den Förderzylindern 10 vor die eine oder andere Öffnung 22 geschwenkt. Auf diese Weise wird bei in Richtung des Pfeils 30 zurückbewegtem Förderkolben 12 Material aus dem Materialaufgabebehälter 14 in Richtung des Pfeils 32 durch die offene Öffnung 22 in den betreffenden Förderzylinder 10 angesaugt, während über den anderen Förderkolben 12 Material in Richtung der Pfeile 34,36,38 durch das Schwenkrohr 16 hindurch in eine hinter der Rückwand 24 des Materialaufgabebehälters 14 befindliche Förderleitung 45 transportiert wird. Zu diesem Zweck ist das Schwenkrohr 16 über einen Flansch 40 mit einem Verlängerungsrohr 42 verbunden, das seinerseits über eine Rohrdrehverbindung 43 an die beispielsweise zu einem Betonverteilermast führende Förderleitung 45 angeschlossen ist.

Der Flansch 40 ist mittels zweier Spannschrauben 44 mit dem Umsteuerhebel 46 des Umsteuermechanismus 18 lösbar verbunden, der an seinem unteren Ende zwei nach entgegengesetzten Seiten weisende, als Kugelpfannen ausgebildete Lagerstellen 48 für den Anschluß je eines kolbenseitigen Kugelkopfs 50 der beiden Antriebszylinder 52 aufweist. Auf der Zylinderseite sind die Antriebszylinder 52 mit einem weiteren Kugelkopf 54 in je einer förderzylinderfesten, als Kugelpfanne ausgebildeten Lagerstelle 56 gelagert.

Um ein dichtes Anliegen des unteren Endes des Schwenkrohrs 16 an der Verschleißplatte 26 zu gewährleisten, wird auf den unteren Arm des Schwenkrohrs 16 über eine von außen betätigbare Stellschraube 62 und ein entsprechendes Druckstück eine senkrecht zur Rückwand 24 des Materialaufgabebehälters 14 wirkende Kraft ausgeübt, wobei während des Pumpvorgangs der Verschleißring 28 zusätzlich über hydrostatische Kräfte innerhalb des Schwenkrohrs 16 gegen den jeweiligen Öffnungsrand der Verschleißplatte 26 angepreßt wird.

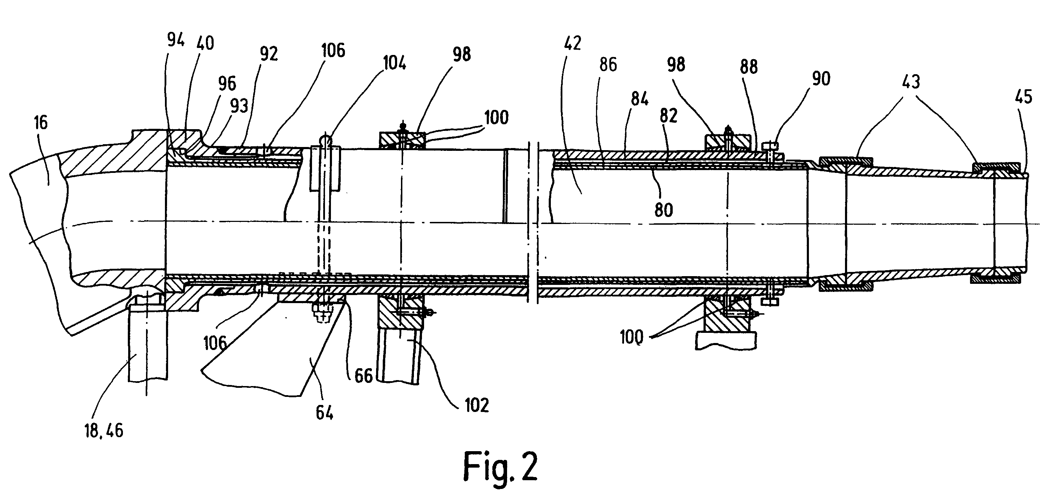

Wie aus Fig. 2 zu ersehen ist, ist das Verlängerungsrohr 42 zweilagig ausgebildet. Es weist eine innere verschleißfeste Rohrlage 80 aus gehärtetem Stahl und eine äußere Rohrlage 82 aus zähem, ungehärtetem Stahl auf, die an ihrer Trennstelle materialschlüssig miteinander verbunden sind. Das Verlängerungsrohr 42 wird über einen Großteil seiner Länge von einem konzentrischen Tragrohr 84 übergriffen, das durch einen durchgehenden Ringspalt 86 von der Oberfläche des Verlängerungsrohrs 42 getrennt und an seinem freien Ende 88 am Verlängerungsrohr 42 mittels mehrerer, in Umfangsrichtung verteilt angeordneter Stellschrauben 90 am Verlängerungsrohr festgeklemmt ist. Das Tragrohr 84 ist an seinem schwenkrohrseitigen Ende 92 an einem Stutzen 93 des Flanschs 40 angeschweißt. Das Verlängerungsrohr weist einen schwenkrohrseitigen Bund 94 auf, während der Flansch 40 eine entsprechende Ringstufe 96 zur formschlüssigen Aufnahme des Bunds 94 aufweist. Zur Abstützung des das Verlängerungsrohr 42 enthaltenden Tragrohrs 84 sind zwei im Abstand voneinander angeordnete Drehlager 98 vorgesehen, die mit auswechselbaren Lagerschalensegmenten 100 bestückt und über die Stützen 102 gestellfest abgestützt sind. Wie aus Fig. 2 zu ersehen ist, weist das Verlängerungsrohr 42 zumindest an der Anschlußstelle des Schwenkrohrs 16 einen größeren Innendurchmesser als das Schwenkrohr auf. Damit wird der unterschiedlichen Verschleißfestigkeit des Schwenkrohrs und der inneren Rohrlage 80 des Verlängerungsrohrs Rechnung getragen. Das Tragrohr 84 weist in der Nähe seines schwenkrohrseitigen Endes 92 mehrere radiale Wanddurchbrüche 106 auf, durch die in den Ringspalt 86 gelangendes flüssiges Fördergut nach außen gelangen kann. Damit ist eine einfache Leckerkennung von außen her möglich.

Auf der Förderleitungsseite des Umsteuerhebels 46 ist ein Stützarm 64 angeschweißt, dessen nach oben weisendes freies Ende eine Lagerschale 66 trägt, in der das mit dem Schwenkrohr 16 verbundene Tragrohr 84 abgestützt ist. Der Stützarm 64 nimmt die beim Pump- und Schwenkvorgang am Umsteuerhebel 46 auftretenden Biegemomente auf und überträgt diese auf das Tragrohr 84 und das Schwenkrohr 16. Gleichwohl wird mit dieser Anordnung erreicht, daß zu Wartungszwecken oder im Verschleißfall das Tragrohr 84, das Verlängerungsrohr 42 und das Schwenkrohr 16 durch Lösen der Spannschrauben 44 und der Flanschschrauben 68 einfach abgenommen werden können, ohne daß dazu der Umsteuerhebel 46 und dessen Stützarm 64 entfernt werden müssen. Um ein Abheben des Tragrohrs 84 von der Lagerschale 66 des Stützarms 64 zu verhindern, ist das Tragrohr 84 mit einem U-förmig gebogenen Metallbügel 104 an der Lagerschale 66 lösbar angeschraubt.

An der Unterseite des Materialaufgabebehälters 14 befindet sich eine mit einem Schwenkdeckel 70 verschließbare Öffnung 72, über die der Materialaufgabebehälter 14 vollständig entleert werden kann.

Zusammenfassend ist folgendes festzuhalten: Die Erfindung bezieht sich auf eine Schiebervorrichtung für ZweizylinderDickstoffpumpen, insbesondere für den Einsatz in fahrbaren Betonpumpen. Die Schiebervorrichtung 20 weist ein im wesentlichen C-förmig gekrümmtes Schwenkrohr 16 auf, das an seinem oberen Ende mit einem über die Rückwand 24 eines Materialaufgabebehälters überstehenden und an seinem dem Schwenkrohr abgewandten Ende über eine Rohrdrehverbindung an eine Förderleitung angeschlossenen Verlängerungsrohr 42 starr verbunden und um die Achse des Verlängerungsrohrs so drehbar angeordnet ist, daß sein anderes Ende im Wechsel an die Öffnungen 22 der Förderzylinder 10 anschließt. Um trotz des Verschleisses im Verlängerungsrohr 42 eine sichere Betriebsweise zu gewährleisten, wird gemäß der Erfindung ein das Verlängerungsrohr 42 koaxial übergreifendes, starr mit dem oberen Schwenkrohrende verbundenes und sich zumindest über einen Teil des Verlängerungsrohrs 42 erstreckendes Tragrohr 84 vorgesehen, das an mindestens einem im Abstand von der Rückwand 24 des Materialaufgabebehälters 14 angeordneten gestellfesten Drehlager 98 abgestützt und mit dem Verlängerungsrohr 42 lösbar verbunden ist.

## Patentansprüche

1. Schiebervorrichtung für eine Pumpe mit zwei im Gegentakt arbeitenden Förderzylindern (10) zum Fördern von Dickstoffen, die der Pumpe über einen Materialaufgabebehälter (14) zugeleitet werden, mit einem in den Materialaufgabebehälter (14). eingreifenden, im wesentlichen C-förmig gekrümmten Schwenkrohr (16), das an seinem oberen Ende mit einem über die Rückwand (24) des Materialaufgabebehälters (14) im wesentlichen parallel zu den Förderzylindern (10) überstehenden und an seinem dem Schwenkrohr (16) abgewandten Ende über eine Rohrdrehverbindung an eine Förderleitung (45) angeschlossenen Verlängerungsrohr (42) starr verbunden und um die Achse des Verlängerungsrohrs mittels eines Umsteuermechanismus (18) so drehbar angeordnet ist, daß sein anderes, vorzugsweise mit einem Verschleißring (28) bestücktes unteres Ende im Wechsel an die öffnungen (22) der an der Rückwand (24) des Materialaufgabebehälters (14) außerhalb von diesem angeschlossenen Förderzylinder (10) anschließt, **gekennzeichnet durch** ein das Verlängerungsrohr (42) koaxial übergreifendes, starr mit dem oberen Schwenkrohrende verbundenes und sich zumindest über einen Teil des verlängerungsrohrs (42) erstreckendes Tragrohr (84), das an mindestens einem im Abstand von der Rückwand (24) des Materialaufgabebehälters (14) angeordneten Drehlager (98) abgestützt und mit dem Verlängerungsrohr (42) lösbar verbunden ist, wobei das Verlängerungsrohr (42) über einen außerhalb des Materialaufgabebehälters angeordneten Flansch (40) mit dem Schwenkrohr und mit einem Umsteuerhebel (46) des Umsteuermechanismus (18) lösbar verbunden ist, und wobei das -Tragrohr (84) starr mit dem Flansch (40) verbunden, vorzugsweise an diesem angeschweißt ist.

2. Schiebervorrichtung für eine Pumpe mit zwei im Gegentakt arbeitenden Förderzylindern (10) zum Fördern von Dickstoffen, die der Pumpe über einen Materialaufgabebehälter (14) zugeleitet werden, mit einem in den Materialaufgabebehälter (14) eingreifenden, im wesentlichen C-förmig gekrümmten Schwenkrohr (16), das an seinem oberen Ende mit einem über die Rückwand (24) des Materialaufgabebehälters (14) im wesentlichen parallel zu den Förderzylindern (10) überstehenden und an seinem dem Schwenkrohr (16) abgewandten Ende über eine Rohrdrehverbindung an eine Förderleitung (45) angeschlossenen Verlängerungsrohr (42) starr verbunden und um die Achse des Verlängerungsrohrs mittels eines Umsteuermechanismus (18) so drehbar angeordnet ist, daß sein anderes, vorzugsweise mit einem Verschleißring (28) bestücktes unteres Ende im Wechsel an die Öffnungen (22) der an der Rückwand (24) des Materialaufgabebehälters (14) außerhalb von diesem angeschlossenen Förderzylinder (10) anschließt, **gekennzeichnet durch** ein das Verlängerungsrohr (42) koaxial übergreifendes, starr mit dem oberen Schwenkrohrende verbundenes und sich zumindest über einen Teil des Verlängerungsrohrs (42) erstreckendes Tragrohr (84), das an mindestens einem im Abstand von der Rückwand (24) des Materialaufgabebehälters (14) angeordneten Drehlager (98) abgestützt und mit dem Verlängerungsrohr (42) lösbar verbunden ist, wobei das Verlängerungsrohr (42) und das Tragrohr (84) über einen gemeinsamen, außerhalb des Materialaufgabebehälters angeordneten Flansch mit dem Schwenkrohr (16) und einem Umsteuerhebel (46) des Umsteuermechanismus (18) lösbar verbunden sind.

3. Schiebervorrichtung nach Anspruch 1 oder 2, **dadurch gekennzeichnet, daß** die Außenfläche des Verlängerungsrohrs (42) und die Innenfläche des Tragrohrs (84) einen Ringspalt (86) begrenzen.

4. Schiebervorrichtung nach einem der Ansprüche 1 bis 3, **dadurch gekennzeichnet, daß** das Tragrohr (84) an seinem freien Ende mit dem Verlängerungsrohr (42) lösbar verklemmt oder verkeilt ist.

5. Schiebervorrichtung nach Anspruch 4, **dadurch gekennzeichnet, daß** das Tragrohr (84) an seinem freien Ende mittels Stellschrauben (90) am Verlängerungsrohr (42) lösbar befestigt ist.

6. Schiebervorrichtung nach einem der Ansprüche 1 bis 5, **dadurch gekennzeichnet, daß** das Verlängerungsrohr (42) zweilagig ausgebildet ist.

7. Schiebervorrichtung nach Anspruch 6, **dadurch gekennzeichnet, daß** das zweilagige Verlängerungsrohr (42) eine verschleißfeste, vorzugsweise gehärtete innere Rohrlage (80) und eine zähe, vorzugsweise ungehärtete äußere Rohrlage aufweist.

8. Schiebervorrichtung nach einem der Ansprüche 1 bis 7, **dadurch gekennzeichnet, daß** das Verlängerungsrohr (42) zumindest an der Anschlußstelle des Schwenkrohrs (16) einen größeren Innendurchmesser als das Schwenkrohr (16) aufweist.

9. Schiebervorrichtung nach einem der Ansprüche 1 bis 8, **dadurch gekennzeichnet, daß** die Drehlager (98) als Gleitlager mit auswechselbaren Lagerschalensegmenten (100) ausgebildet sind.

10. Schiebervorrichtung nach einem der Ansprüche 1 bis 9, **dadurch gekennzeichnet, daß** an einem Umsteuerhebel (46) des Umsteuermechanismus (18) ein förderleitungsseitig auskragender Stützarm (64) angeordnet ist, auf welchem das Tragrohr (84) abstützbar ist.

11. Schiebervorrichtung nach Anspruch 10, **dadurch gekennzeichnet, daß** der Stützarm (64) mit seinem vorzugsweise eine Lagerschale (66) tragenden freien Ende lose gegen das Tragrohr (84) anliegt.

12. Schiebervorrichtung nach Anspruch 10 oder 11, **dadurch gekennzeichnet, daß** der Stützarm (64) an seinem vorzugsweise eine Lagerschale (66) tragenden freien Ende mit dem Tragrohr (84) lösbar verbunden ist.

13. Schiebervorrichtung nach einem der Ansprüche 1 bis 12, **dadurch gekennzeichnet, daß** das Tragrohr (84) zumindest in der Nähe seines schwenkrohrseitigen Endes (92) mindestens einen vorzugsweise nach unten weisenden radialen Wanddurchbruch (106) aufweist.

## Claims

1. Sliding device for a pump with two conveyance cylinders (10) operating in counter-stroke for conveyance of viscous materials, which materials are supplied to the pump from a material feeding bin (14), said sliding device including a C-shape curved pivot pipe (16), an extension pipe, and a discharge conduit,
the pivot pipe extending into the material feeding bin (14) and at its upper end being fixedly connected to the extension pipe,
the extension pipe (42) projecting over the back wall (24) of the material feeding bin (14) essentially parallel to the conveyance cylinders (10) and, on its end opposite the pivot pipe (16), being connected to the discharge conduit (45) via a pipe rotating connection,
the pivot pipe connected for pivoting via a reversing mechanism (18) in such a manner that its lower end, preferably provided with an anti-friction ring (28), is caused to connect alternatively outside the openings (22) of the conveyance cylinders (10) which are connected to the back wall (24) of the material supply bin (14),
**characterized by** a support pipe (84) which coaxially encompases the extension pipe (42), is fixedly connected at the upper end of the pivot pipe, and extends along at least one part of the extension pipe (42), the support pipe (84) being stayed upon at least one rotating support (98) spaced apart from the back wall (24) of the material feeding bin (14) and being releasably connected to the extension pipe (42), wherein the extension pipe (42) is releasably connected via a flange (40) with the pivot pipe and with a reversing lever (46) of the reversing mechanism (18), and wherein the support pipe (84) is rigidly connected with the flange (40), preferably its welded thereto.

2. Sliding device for a pump with two conveyance cylinders (10) operating in counter-stroke for conveyance of viscous materials, which materials are supplied to the pump from a material feeding bin (14), said sliding device including a C-shape curved pivot pipe (16), an extension pipe, and a discharge conduit,
the pivot pipe extending into the material feeding bin (14) and at its upper end being fixedly connected to the extension pipe,
the extension pipe (42) projecting over the back wall (24) of the material feeding bin (14) essentially parallel to the conveyance cylinders (10) and, on its end opposite the pivot pipe (16), being connected to the discharge conduit (45) via a pipe rotating connection,
the pivot pipe connected for pivoting via a reversing mechanism (18) in such a manner that its lower end, preferably provided with an anti-friction ring (28), is caused to connect alternatively outside the openings (22) of the conveyance cylinders (10) which are connected to the back wall (24) of the material supply bin (14),
**characterized by** a support pipe (84) which coaxially encompases the extension pipe (42), is fixedly connected at the upper end of the pivot pipe, and extends along at least one part of the extension pipe (42), the support pipe (84) being stayed upon at least one rotating support (98) spaced apart from the back wall (24) of the material feeding bin (14) and being releasably connected to the extension pipe (42), wherein the extension pipe (42) is releasably connected, via a flange external to the material feeding bin (14), with the pivot pipe (16) and a reversing lever (46) of the reversing mechanism (18), and wherein the support pipe (84) is rigidly connected with the flange, preferably welded thereto.

3. Sliding device according to one of Claims 1-3, thereby characterized, that the outer surface of the extension pipe (42) and the inner surface of the support pipe (84) define an annular clearance (86).

4. Sliding device according to Claim 4, thereby characterized, that the support pipe (84) on its free end is releasably conneceted with the extension pipe (42) via a wedge or double wedge connection.

5. Sliding device according to Claim 4, thereby characterized, that the support pipe (84) on its free end is releasably secured to the extension pipe (42) via set screws (90).

6. Sliding device according to one of Claims 1-5, thereby characterized, that the extension pipe (42) is formed of two parts.

7. Sliding device according to Claim 6, thereby characterized, that the two-part extension pipe (42) is comprised of a friction resistant, preferably hardened inner pipe layer (80) and a softer, preferably unhardened, outer pipe layer.

8. Sliding device according to one of Claims 1-7, thereby characterized, that the extension pipe (42) exhibits at least in the connection part to the pivot pipe (16) a larger inner diameter than the pivot pipe (16).

9. Sliding device according to one of Claims 1-8, thereby characterized, that the rotating mount (98) is formed as a slide mount with replaceable mount segments (100).

10. Sliding device according to one of Claims 1-9, thereby characterized, that a support arm (64) corbeled or cantilevered on the conveyance conduit side is provided on the reversing lever (46) of the reversing mechanism (18), upon which the support pipe (84) is supportable.

11. Sliding device according to Claim 10, thereby characterized, that the support arm (64) lies, with its preferably one mounting shell (66) carrying free end, loosely against the support pipe (84).

12. Sliding device according to Claim 10 or 11, thereby characterized, that the support arm (64) is releasably connected, at its preferably one mounting shell (66) carrying free end, with the support pipe (84).

13. Sliding device according to one of Claims 1-12, thereby characterized, that the support pipe (84) at least in the vicinity of its pivot pipe side end (92) exhibits at least one preferably downward directed radial wall throughhole (106).

## Revendications

1. Dispositif coulissant pour une pompe avec deux cylindres d'amenée travaillant symétriquement (10) pour amener des liquides épais qui sont dirigés vers la pompe via un bac de chargement de matériau (14), avec un tube articulé (16) recourbé sensiblement en C qui s'engage dans le bac de chargement de matériau (14), et qui, au niveau de son extrémité supérieure, est raccordé de façon rigide à un tube de rallonge (42) dépassant au-dessus de la paroi arrière (24) du bac de chargement de matériau (14) sensiblement parallèlement aux cylindres d'amenée (10) et qui, au niveau de son extrémité opposée au tube articulé (16), est relié via un joint tournant pour tuyaux, à une conduite d'alimentation (45) et qui est disposé de façon à pivoter autour de l'axe du tube de rallonge au moyen d'un mécanisme d'inversion de marche (18), de sorte que son autre extrémité inférieure, de préférence pourvue d'une bague d'usure (28), se raccorde alternativement aux ouvertures (22) des cylindres d'amenée (10) raccordés à la paroi arrière (24) du bac de chargement de matériau (14) à l'extérieur de celui-ci, **caractérisé par** un tuyau de support (84) entourant coaxialement le tube de rallonge (42), raccordé de façon rigide à l'extrémité côté tube articulé supérieure et s'étendant au moins sur une partie du tube de rallonge (42), qui s'appuie sur au moins un coussinet pivotant (98) disposé à distance de la paroi arrière (24) du bac de chargement de matériau (14) et qui est relié de façon amovible au tube de rallonge (42), le tube de rallonge (42) étant relié de façon amovible au tube articulé via une bride (40) disposée à l'extérieur du bac de chargement de matériau et à un levier d'inversion de marche (46) du mécanisme d'inversion de marche (18), le tuyau de support (84) étant relié de façon rigide à la bride (40), étant de préférence soudé à celle-ci.

2. Dispositif coulissant pour une pompe avec deux cylindres d'amenée travaillant symétriquement (10) pour amener des liquides épais qui sont dirigés vers la pompe via un bac de chargement de matériau (14), avec un tube articulé (16) recourbé sensiblement en C qui s'engage dans le bac de chargement de matériau (14), et qui, au niveau de son extrémité supérieure, est raccordé de façon rigide à un tube de rallonge (42) dépassant au-dessus de la paroi arrière (24) du bac de chargement de matériau (14) sensiblement parallèlement aux cylindres d'amenée (10) et qui, au niveau de son extrémité opposée au tube articulé (16), est relié via un joint tournant pour tuyaux, à une conduite d'alimentation (45) et qui est disposé de façon à pivoter autour de l'axe du tube de rallonge au moyen d'un mécanisme d'inversion de marche (18), de sorte que son autre extrémité inférieure, de préférence pourvue d'une bague d'usure (28), se raccorde alternativement aux ouvertures (22) des cylindres d'amenée (10) raccordés à la paroi arrière (24) du bac de chargement de matériau (14) à l'extérieur de celui-ci, **caractérisé par** un tuyau de support (84) entourant coaxialement le tube de rallonge (42), raccordé de façon rigide à l'extrémité côté tube articulé supérieure et s'étendant au moins sur une partie du tube de rallonge (42), qui s'appuie sur au moins un coussinet pivotant (98) disposé à distance de la paroi arrière (24) du bac de chargement de matériau (14) et qui est relié de façon amovible au tube de rallonge (42), le tube de rallonge (42) et le tuyau de support (84) étant reliés de façon amovible au tube articulé (16) via une bride commune (40) disposée à l'extérieur du bac de chargement de matériau et à un levier d'inversion de marche (46) du mécanisme d'inversion de marche (18).

3. Dispositif coulissant selon la revendication 1 ou 2, **caractérisé en ce que** la surface extérieure du tube de rallonge (42) et la surface intérieure du tuyau de support (84) définissent un passage circulaire (86).

4. Dispositif coulissant selon l'une des revendications 1 à 3, **caractérisé en ce que** le tuyau de support (84), en son extrémité libre, est coincé ou bloqué de façon amovible avec le tube de rallonge (42).

5. Dispositif coulissant selon la revendication 4, **caractérisé en ce que** le tuyau de support (84), en son extrémité libre, est fixé de façon amovible au tube de rallonge (42) au moyen de vis de serrage (90).

6. Dispositif coulissant selon l'une des revendications 1 à 5, **caractérisé en ce que** le tube de rallonge (42) est conçu en deux couches.

7. Dispositif coulissant selon la revendication 6, **caractérisé en ce que** le tube de rallonge en deux couches (42) présente une couche de tube intérieure anti-usure, de préférence trempée (80), et une couche de tube extérieure dure, de préférence non trempée (82).

8. Dispositif coulissant selon l'une des revendications 1 à 7, **caractérisé en ce que** le tube de rallonge (42) présente au moins au niveau du point de jonction au tube articulé (16) un diamètre intérieur supérieur à celui du tube articulé (16).

9. Dispositif coulissant selon l'une des revendications 1 à 8, **caractérisé en ce que** les coussinets pivotants (98) sont conçus à la façon de paliers glissants pourvus de segments de coquilles de coussinets échangeables (100).

10. Dispositif coulissant selon l'une des revendications 1 à 9, **caractérisé en ce que** le levier d'inversion de marche (46) du mécanisme d'inversion de marche (18) comporte un bras d'appui (64) partant en saillie côté conduite d'alimentation, sur lequel le tuyau de support (84) peut prendre appui.

11. Dispositif coulissant selon la revendication 10, **caractérisé en ce que** le bras d'appui (64) s'appuie librement avec son extrémité libre portant de préférence une coquille de coussinet (66) contre le tuyau de support (84).

12. Dispositif coulissant selon la revendication 10 ou 11, **caractérisé en ce que** le bras d'appui (64) est relié de façon amovible en son extrémité libre portant de préférence une coquille de coussinet (66) au tuyau de support (84).

13. Dispositif coulissant selon l'une des revendications 1 à 12, **caractérisé en ce que** le tuyau de support (84) comporte au moins à proximité de son extrémité côté tube articulé (92) au moins un percement radial de paroi (106) orienté de préférence vers le bas.
